# EUROPEAN PATENT APPLICATION

(11) **EP 4 501 704 A1**
(43) Date of publication of application: **05.02.2025**
(21) Application number: 24191374.8
(22) Date of filing: 29.07.2024
(51) Int. Cl.: B60Q 1/00, F21S 41/24, F21S 43/14, F21S 43/239, F21S 43/245, F21S 43/235, F21S 43/20, F21W 103/10, F21W 103/20, F21W 103/55, F21W 104/00

(54) **LAMP FOR VEHICLE HEADLIGHT**

(30) Priority: 31.07.2023 ES 202330665
(71) Applicant: Seat, S.A., 08760 Martorell - Barcelona (ES)
(72) Inventor: ROBLES CERVANTES, Silvia, 08760 MARTORELL (ES); PARIS GARCIA, Maite, 08760 MARTORELL (ES)
(74) Representative: Pons

(57) **Abstract**

A first aspect of the present invention relates to a lamp for vehicle headlight, wherein the lamp comprises a first pattern light guide (11) and an illumination light guide (2), the front lighting exit surface (4) of the illumination light guide (2) being substantially parallel to the first rear entry surface (113) of the first pattern light guide (11) and at least partially overlapping according to a direction of emission of the light beams of the lighting unit (1) towards said first rear entry surface (113), so that at least part of the light beams emitted by the previous lighting exit surface (4) are directed towards said first rear entry surface (113) of the first pattern light guide (11) and pass through the first pattern light guide (11) until they are emitted through the first previous exit surface (111) of the first pattern light guide (11). A second aspect of the present invention concerns a vehicle headlight provided with said lamp for vehicle headlight.

## Description

### Technical field

The present invention relates, in a first aspect, to a lamp for vehicle headlights suitable for generating both an illumination function and an informative function by means of light patterns and, in a second aspect, a vehicle headlight provided with such a lamp.

### Prior art

The state of the art is known for lamps capable of generating both the conventional lighting function and an informative function, which, by means of light patterns, transmits messages to the vehicle owner.

For example, documents US2020189449 and JP2014082041 disclose lamps for vehicle headlights capable of generating illuminated patterns that inform the user, for example, that the vehicle has been unlocked or locked. For this purpose, they have light guides positioned parallel to each other and fitted with optics (such as reflective elements) configured to reflect the light from respective light sources, thus forming the light patterns visible from the main light exit surface of the headlight. However, in order to generate the light patterns, these lamps require an additional area to that needed for the illumination function, requiring considerably more space in the respective headlights.

Therefore, there is a need for vehicle headlight lamps that provide both of the above-mentioned functions without excessively increasing the occupied volume.

### Description of the invention

A first object of the present invention consists of a lamp for vehicle headlights, which is of the type comprising a first pattern generation unit provided with a first pattern light guide and at least one first pattern light source (patterns being understood as luminous figures). The first pattern light guide is defined by a first front exit surface configured and arranged to exit the light beams emitted by said first pattern light source, by a first lateral entry surface through which the light beams emitted by said first pattern light source enter, the first lateral entry surface being oblique to the first front exit surface, and by a first rear entry surface parallel to the first front exit surface. The first rear entry surface is provided with a portion having a first array of reflective elements (i.e., reflective-type optical elements) configured and arranged to reflect light beams coming from the first lateral entry surface so as to exit transversely through the first front exit surface. Therefore, an external observer mainly visualizes a pattern or illuminated area in correspondence with said first array of reflecting elements, so that not all of the first pattern light guide surface is visible by said observer. Light guide means a component configured to internally transmit light beams from the entry surface to the exit surface.

This lamp for vehicle headlight is characterized by:
- comprising an lighting unit provided with an illumination light guide and at least one illumination light source, wherein the illumination light guide:
   o being defined by an lighting exit front surface and an illumination entrance side surface oblique to said lighting exit front surface, and
   o being configured and arranged to receive on the lighting input side surface the light beams coming from the at least one illumination light source and to emit them through the lighting output front surface, and whereby
- the first rear first entry surface of the first pattern light guide is arranged substantially parallel and at least partially overlapping said previous lighting exit surface of the illumination light guide, according to a direction of emission of the light beams of the lighting unit towards said first rear first entry surface, so that at least part of said light beams emitted by said previous lighting exit surface are directed towards said first rear entry surface of said first pattern light guide and pass through said first pattern light guide in a substantially orthogonal manner until they are emitted through said first previous exit surface.

Since said reflective elements (be they optics, etchings, etc.) of the first pattern generating unit are configured and arranged solely to deflect light beams traveling inside the first pattern light guide in a longitudinal direction thereof, i.e. parallel to the first front exit surface, light entering said first pattern light guide through the first rear entry surface is directed from the lighting unit passing through said first pattern light guide and being emitted through the first front exit surface without being affected by said reflective structures. Affectation is understood to mean that it does not change the luminous properties in a remarkable way, nor does it change its direction.

By direction of emission of the light beams of the lighting unit is meant, for example, in the case of a headlight installed at the front of the vehicle, a direction substantially parallel to the direction of travel of the vehicle. It is understood that the headlight emits light by generating approximately a cone, whereby the generatrix of said cone would be substantially parallel to the direction of emission of the light beams of the lighting unit. Accordingly, an outside observer would observe said first pattern light guide partially overlapping said illumination guide, at least their respective first front exit surface, first rear entry surface and front illumination surface.

Such overlapping allows that, in an example mode where the illumination guide generates a lighting function such as flashing or position light or daylight, and the first pattern light guide generates a signaling function, such as a welcome light, the external observer would see such signaling and lighting functions one overlapping the other. Their ignition would preferably be alternate, i.e., non-simultaneous, according to whether their respective first pattern light source (12) and their illumination light source are turned on. In the case of simultaneous ignition, in those areas of overlap between the first pattern light guide and the illumination guide, only a single illuminated surface would be observed.

Thanks to this configuration, the present lamp for vehicle headlights allows, for practically the same surface and the same headlight volume (or almost the same), to generate both the patterns that emit information and the light beams for illumination, without altering one or the other.

In one possible embodiment, the first rear entry surface overlaps by at least 70% the area of the previous lighting exit surface. Preferably, the overlap is 100%.

In one possible embodiment, the present vehicle headlight lamp comprises at least one second pattern generation unit provided with at least one second pattern light guide and at least one second pattern light source, wherein each second pattern light guide is defined by a second front exit surface, a second input side surface oblique to the second output front surface and a second input rear surface parallel to the second output front surface, the second input rear surface being provided with a portion having a second array of reflective elements configured and arranged to reflect light beams coming from the second input side surface so as to exit transversely through the second output front surface. At the same time, the at least one second patterned light guide is arranged between the first patterned light guide and the illumination light guide (i.e., it is arranged at least partially overlapping in the direction of emission of the light beams both the first patterned light guide and the illumination light guide), such that at least part of the light beams emitted from the first front lighting exit surface of the illumination light guide pass substantially orthogonally through the at least a second pattern light guide towards the first rear entry surface of the first pattern light guide. Thus, according to an embodiment, a single second pattern generation unit is arranged between the first pattern light guide and the illumination light guide. Conversely, according to an alternative embodiment, a plurality of second pattern generation units are arranged between the first pattern light guide and the illumination light guide, each second pattern generation unit being adjacent to another contiguous second pattern generation unit.

In a preferred implementation of the above embodiment, the second rear entry surface of the at least one second pattern light guide is completely overlapped, according to an emission direction of the light beams of the lighting unit, to said previous lighting exit surface of the illumination light guide, so that the totality of said light emitted by the previous lighting exit surface is directed towards said second rear entry surface of the second pattern light guide. Also optionally, the second front exit surface of the at least one second pattern light guide is completely overlapped, according to an emission direction of the light beams of the lighting unit, to said front lighting exit surface of the illumination light guide, so that the entire light emitted by the front lighting exit surface is directed towards said second rear entry surface of the second pattern light guide.

Optionally, the first rear first entry surface of the at least one first pattern light guide is completely overlapped, according to an emission direction of the light beams of the lighting unit, to said second front exit surface of the at least one second pattern light guide, so that the entirety of said light emitted by the second front exit surface is directed towards said first rear first entry surface of the first pattern light guide. Also optionally, the first front exit surface of the first pattern light guide is completely overlapped, according to an emission direction of the light beams of the lighting unit, to said second front lighting exit surface of the at least one second front exit surface, so that the entire light emitted by the front lighting exit surface and by the at least one second pattern light guide is extracted through the first pattern light guide. A visual effect is generated in which different illuminated patterns or different illumination functions are generated on the same illumination surface, i.e. the first previous exit surface of the first pattern light guide.

Thanks to this, the light directed from the lighting unit passes through both the first and the at least a second pattern light guide, being emitted through the first upstream exit surface without being affected by the two reflective element structures, while the lamp can realize a double combination of light patterns.

Optionally, the second array of reflective elements of the at least one second pattern light guide is located in a non-overlapping area to the portion with the first array of reflective elements of the first pattern light guide. Thanks to this, the light patterns generated by means of the first pattern light guide do not interfere with those of the at least one second pattern light guide. Lighting ceremonies can be achieved in this way, wherein an observer sees through the first former exit surface different illuminated geometries or different illuminated patterns, according to the sequential switching on of the at least one first patterned light source and the at least one second patterned light source. Thus, an observer can see through said first front exit surface, in an example embodiment with a single second pattern light guide, either a first pattern illuminated through the first array of reflective elements, or a second pattern illuminated through the second array of reflective elements, or both illuminated at the same time.

In one possible embodiment, the vehicle headlight lamp comprises a plurality of pattern generation units, wherein the portion with the second array of reflective elements of each of the second pattern light guides is located in a non-overlapping area to the portion with the second array of reflective elements of another of the adjacent second pattern generation units. Thus, an observer can see through said first front exit surface, in an example embodiment with two second pattern light guides, either a first pattern illuminated through the first array of reflective elements, or a second pattern illuminated through the second array of reflective elements, or a third pattern illuminated through the other second array of reflective elements, or all three patterns illuminated at the same time.

In one possible embodiment of the lamp for vehicle headlights, the lighting output front surface comprises illumination front optics configured to direct the emitted light beams according to the emission direction of the light beams of the lighting unit and to provide a desired homogeneity, intensity and/or photometry of light. As can be expected, the illumination light guide comprises a rear reflective surface provided with rear illumination optics configured to reflect towards the front lighting exit surface the light received from the side lighting entry surface. Optionally, the illumination light guide comprises internal light reflecting surfaces configured and arranged to provide a desired light homogeneity, intensity and/or photometry. This lighting unit is in charge of fulfilling a lighting or signaling function, which must comply with photometry specifications, perception angles and other specifics. To achieve this, the illumination guide includes the necessary optical structures.

In one possible implementation of the above embodiment, the first patterned light guide output front surface is provided with a portion having light deflection optics configured and arranged to receive light coming from the lighting output front surface of the illumination light guide and deflect it into an oblique direction with respect to the emission direction of the light beams of the lighting unit. As a result, the illumination covers a sufficient angle to comply with the relevant regulations for viewing angles of the light from vehicle headlight illumination. It is noted that the lighting unit occupies in the vehicle headlight a position further back or rearward with respect to the light extraction surface of the vehicle headlight lamp. Superimposed on said lighting unit is the first pattern generation unit and, according to the embodiment, at least a second pattern generation unit. Accordingly, in order to comply with the viewing angles, the lighting unit rests on the most front surface of the first pattern generation unit, say the first front exit surface, to deflect the light beams emitted by said lighting unit.

Optionally in this implementation, the portion with light deflecting optics of the at least one first pattern light guide is located in an area non-overlapping to the portion with the first array of reflecting elements and/or non-overlapping to the portion with the second array of reflecting elements according to the emission direction of the light beams of the lighting unit, so that the light deflecting optics do not interfere with the light patterns. Preferably in this implementation, the at least one first pattern light source is configured and arranged to direct the light beams towards the portion with the first array of reflective elements and not direct the light beams towards the portion with light deflecting optics. Although it is a light guide, and therefore, with a light transmission and internal light reflection function, it is sought to minimize the light beams emitted by the at least one first light source of patterns incident on the portion with light deflecting optics so that the latter are not illuminated when generating the light patterns by the first array of reflecting elements.

In one possible embodiment, the illumination light guide, the first patterned light guide and/or the at least one second patterned light guide are made of PMMA.

In one possible embodiment, the vehicle headlight lamp comprises at least one bracket supporting patterned light guides spaced apart from each other so that there is no light transmission between the light guides. For example, the spacing could be between 1 mm and 2 mm, although there is no preferred spacing. By ensuring that there is a change of medium between the input and exit surfaces of the respective pattern light guides, these being the ones that are overlapping each other, it is thus ensured that there is no contact between them and thus no internal reflection in each of the pattern light guides.

In one possible embodiment, the at least one illumination light source is configured to emit light beams of an intensity greater than the intensity of the at least one first pattern light source and/or the at least one second pattern light source, so that the illumination function is not affected by the reflective elements. This ensures that, in case of simultaneous activation of at least one illumination light source and the pattern light sources, the observer perceives the illumination function without any disturbance.

In a possible preferred embodiment, the lamp for vehicle headlights comprises a printed circuit board, the at least one illumination light source and the at least one first pattern light source and/or the at least one second pattern light source being arranged on said printed circuit board, so that manufacturing costs are reduced. The use of the same printed circuit board, with its respective heat sinks and connection elements, is unified for all the lighting and signaling functions described above.

A second object of the present invention consists of a vehicle headlight defined by a main light exit surface, characterized in that it comprises a lamp according to any of the embodiments described above, wherein at least the front illumination surface is focused towards said main light exit surface. As indicated, an observer will be able to see through said main light exit surface of the single vehicle headlight different illuminated zones and/or different lighting/signaling functions, producing a striking design effect.

### Brief description of the drawings

Fig. 1 illustrates a schematic representation of an example embodiment of the present lamp for vehicle headlights in a first mode of operation.
Fig. 2 illustrates a schematic representation of the example embodiment of fig. 2 in a second operating mode.
Fig. 3 illustrates a perspective view of a detailed drawing of an example embodiment of the present lamp placed in a vehicle.
Fig. 4 illustrates a sectional view of the drawing of Fig. 3.

### Detailed description of some examples of embodiment

In view of the aforementioned figures and, in accordance with the numbering adopted, an example of a preferred embodiment of the invention, comprising the parts and elements indicated and described in detail below, can be seen therein.

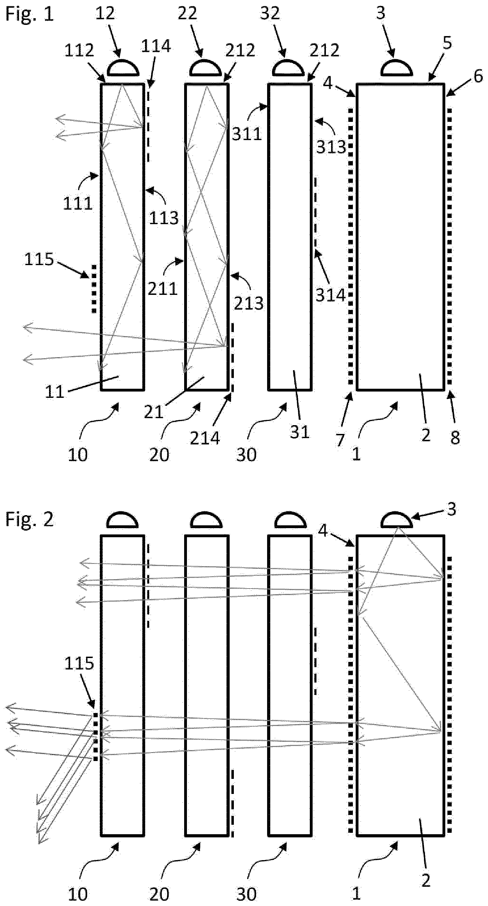

Figures 1 and 2 show a schematic representation of two different modes of operation of the same example embodiment of the present vehicle headlight lamp, which comprises a first pattern generation unit (10), two second pattern generation units (20, 30), and a lighting unit (1). These Figures 1 and 2 in side perspective or side section are shown their respective light guides (11, 21, 31 and 2) overlapping each other, such that the light exiting through the frontmost guide passes through the rear and adjacent light guides, as described below.

Thus, the first pattern generation unit (10) is provided with a first pattern light guide (11) and a first pattern light source (12), wherein the first pattern light guide (11) is defined by a first front exit surface (111), a first lateral entry surface (112) oblique to the first front exit surface (111) and a first rear entry surface (113) parallel to the first front exit surface (111). The first rear entry surface (113) provided with a portion having a first array of reflecting elements (114) configured and arranged to reflect light beams (represented in Figures 1 and 2 by gray arrows) emitted by the first patterned light source (12) and entering through the first lateral entry surface (112), so as to exit transversely through the first front exit surface (111). Thus, the light beams emitted by the first pattern light source (12) enter the first pattern light guide (11) through the first lateral entry surface (112) and are transmitted by internal reflection through the interior of said first pattern light guide (11). The first array of reflecting elements (114) is located on certain portions of the first rear entry surface (113), which redirect the light beams incident on said optical structures to direct them towards the first front exit surface (111), so that the user observes only an illuminated area of said first pattern light guide (11). Said first pattern generation unit (10) is configured to generate an aesthetic or design function, for example, an on or off ceremony of the vehicle.

This exemplary embodiment of the lamp also comprises a lighting unit (1) provided with an illumination light guide (2) and an illumination light source (3), wherein the illumination light guide (2) is defined by an lighting output front surface (4) and an lighting input side surface (5) oblique to said lighting output front surface (4). This illumination light guide (2) is configured and arranged to receive through the lighting input side surface (5) light beams coming from the illumination light source (3) and emit them through the lighting output front surface (4). As described subsequently, said lighting unit (1) is configured to generate a lighting function, such as a position light, a flashing light and/or daylight.

As can be seen in Figures 1 and 2 for this example embodiment, said front lighting exit surface (4) is arranged substantially parallel to said first rear entry surface (113) of the first pattern light guide (11). Accordingly, said front illumination outlet surface (4) is also arranged substantially parallel to the first front outlet surface (111). Furthermore, according to the embodiment shown, said front lighting exit surface (4) is arranged completely overlapping according to the emission direction of the light beams of the lighting unit (1) to said first rear entry surface (113) and to said first front exit surface (111), so that the totality of said light beams emitted by said previous lighting exit surface (4) are directed towards said first rear entry surface (113) of said first pattern light guide (11) and pass through said first pattern light guide (11) until they are emitted through said first previous exit surface (111). An external observer of the vehicle headlight has no direct visual contact with the front lighting exit surface (4), so that the light emitted by the vehicle headlight of the present invention is extracted through the first front exit surface (111) of the first pattern light guide (11).

This example embodiment of the lamp also comprises two second pattern generation units (20, 30) provided with respective second pattern light guides (21, 31) and respective second pattern light sources (22, 32), wherein each second pattern light guide (21, 31) is defined by a second front exit surface (211, 311), a second lateral entry surface (212, 312) oblique to the second front exit surface (211, 311) and a second rear entry surface (213, 313) parallel to the second front exit surface (211, 311).

Each second rear second entry surface (213, 313) is provided with a portion having a respective second array of reflective elements (214, 314) configured and arranged to reflect light beams coming from the respective second lateral entry surface (212, 312) such that they exit transversely through the second front exit surface (211, 311), both second pattern light guides (21, 31) being arranged between the first pattern light guide (11) and the illumination light guide (2).

In this embodiment, the first rear first entry surface (113) of the first pattern light guide (11) is completely overlapped, according to an emission direction of the light beams of the lighting unit (1), to both second front second exit surfaces (211, 311) of the respective second pattern light guides (21, 31). In this way, as depicted in the first mode of operation of figure 1, where only the first pattern light source (12) and one of the second pattern light sources (22) associated with the second pattern light guide (21) the totality of the light beams emitted by the second front exit surface (211) is directed towards said first rear entry surface (113) of the first pattern light guide (11), passing through said first pattern light guide (11) for extraction through the first front exit surface (111). On its side, the first front exit surface (111) also extracts the incoming light beams through the first lateral entry surface (112) by reflection with the first array of reflecting elements (114).

According to the embodiment depicted in Figure 2, the light beams emitted from the previous lighting exit surface (4) of the illumination light guide (2) pass through the first pattern light guide (11) and both second pattern light guides (21, 31), exiting through the first previous exit surface (111) of the first pattern light guide (11). For this purpose, the respective front outlet surfaces (111, 211, 311 and 4) are overlapped with the respective rear inlet surfaces (113, 213 and 313). Further, the respective arrays of reflective elements (114, 214 and 314) of each of the first and second patterned light guides (11, 21 and 31) are configured to minimize disturbances in the light beams emitted by the front illumination surface (4) of the illumination light guide (2), said arrays of reflective elements (114, 214 and 314) to deflect the light beams incident thereon in a direction substantially parallel to the respective rear entry surface (113, 213 and 313) containing them, and not to deflect the light beams incident thereon in a direction substantially perpendicular to said respective rear entry surface (113, 213 and 313).

In this example embodiment depicted in Figure 2, the first front exit surface (111) of the first patterned light guide (11) is provided with a portion with light deflecting optics (115). As can be seen in the mode of operation depicted in said figure 2, in which only the illumination light source (3) is switched on, these light deflecting optics (115) are configured and arranged to receive the light beams coming from the front lighting exit surface (4) of the illumination light guide (2) and deflect them into an oblique direction with respect to the direction of emission of the light beams of the lighting unit (1).

As can be seen, the different portions with their respective arrays of reflecting elements (114, 214, 314) are located in areas neither overlapping each other nor overlapping with said light deflecting optics (115), according to the direction of emission of the light beams of the lighting unit (1). Light deflecting optics (115) direct the light beams in oblique directions in order to comply with the relevant light viewing angle regulations for vehicle headlight illumination.

In this example embodiment, the lighting output front surface (4) of the illumination light guide (2) comprises illumination front optics (7) configured to direct the emitted light beams according to the emission direction of the light beams of the lighting unit (1) and provide a desired homogeneity, intensity and/or photometry of light to meet the requirements of the illumination function to be performed. In turn, the illumination light guide (2) comprises a rear reflective surface (6) provided with rear illumination optics (8) configured to reflect towards the front lighting exit surface (4) the light received from the side lighting entry surface.

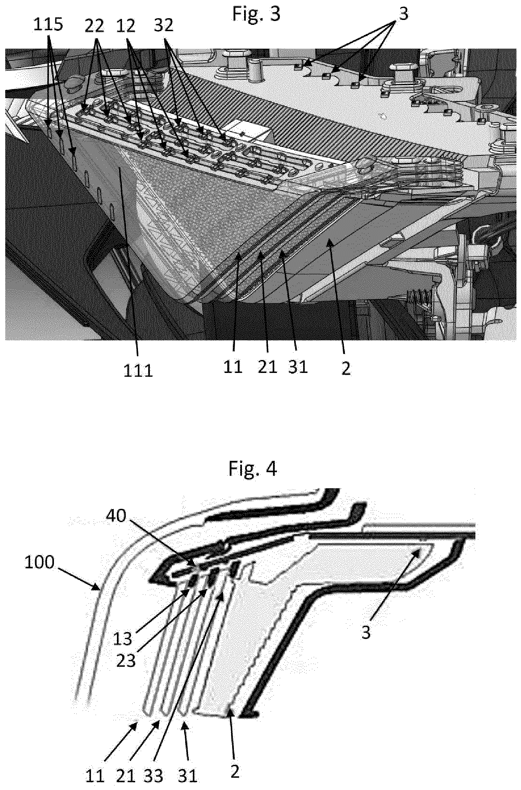

Figure 3 shows a perspective view of a detailed drawing of an example embodiment of the present lamp placed in a vehicle. In order for the patterned light sources (12, 22, 32) in the form of LEDS to be visible in Figure 3, the printed circuit board (40) has not been depicted.

In this embodiment, the first pattern light guide (11) and both second pattern light guides (21, 31) have been depicted as semi-transparent (in fact, they may be made of PMMA). Thus, the triangles forming the reflective elements of these pattern light guides are visible (11, 21, 31). In this embodiment, the first and second patterned light guides (11, 21, 31) are completely overlapping each other. Similarly, the lighting exit surface (4) is also overlapping said light guides (11, 21, 31), such that a user or observer located outside the vehicle only observes illumination through the first front exit surface (111) of the first pattern light guide (11).

As mentioned, the light deflecting optics (115) are located on the left side of the first front exit surface (111). Thus, these light deflection optics (115), located in the outermost part of the headlight, are configured to direct the light beams emitted by the lighting unit (1), which is located in the rearmost or innermost area of the headlight,

As can be seen, the first pattern light guide (11) does not comprise LEDS in the area corresponding to the light deflecting optics (115) (the housings for the LEDS are visible, but empty), so that the light deflecting optics (115) do not interfere with the light patterns to be generated by means of the first pattern light guide (11).

Additionally, said figure 3 shows how each of the first or second pattern generation units (10, 20, 30) and the lighting unit (1) comprise their respective light sources (12, 22, 32, 3). Thus, each of said pattern generation or lighting units can be turned on sequentially or simultaneously, as desired.

Figure 4 shows a sectional view of the drawing of figure 3, in which the main light exit surface (100) of the vehicle headlight can be seen, wherein the front lighting surface (4) is focused towards said main light exit surface (100). This section also shows the printed circuit board (40) comprising said pattern light sources (12, 22, 32) and the illumination light source (3) in the form of LEDS and the brackets (13, 23, 33) supporting the pattern light guides (11, 21, 31) and the illumination light guide (2) spaced apart from each other.

## Claims

1. A lamp for a vehicle headlight, wherein the lamp comprises a first pattern generation unit (10) provided with a first pattern light guide (11) and at least one first pattern light source (12), wherein the first pattern light guide (11) is defined by a first front exit surface (111), a first side entry surface (112) oblique to the first front exit surface (111) and a first rear entry surface (113) parallel to the first front exit surface (111), the first rear entry surface (113) being provided with a portion having a first array of reflecting elements (114) configured and arranged to reflect light beams emitted by the one of at least one first patterned light source (12) through the first lateral entry surface (112), so as to exit transversely through the first front exit surface (111),
**characterized in that** it comprises a lighting unit (1) provided with an illumination light guide (2) and at least one illumination light source (3), wherein the illumination light guide (2) is defined by an lighting output front surface (4) and an lighting input side surface (5) oblique to said lighting output front surface (4),
the illumination light guide (2) being configured and arranged to receive on the lighting input side surface (5) light beams coming from the at least one illumination light source (3) and emit them through the lighting output front surface (4),
said front lighting exit surface (4) being arranged substantially parallel to said first rear entry surface (113) of said first pattern light guide (11) and at least partially overlapping, according to an emission direction of the light beams of the lighting unit (1), said first rear entry surface (113), so that at least part of said light beams emitted by the previous lighting exit surface (4) are directed towards said first rear entry surface (113) of the first patterned light guide (11) and pass through the first patterned light guide (11) until being emitted through the first front exit surface (111).

2. A lamp according to claim 1, wherein the first rear first entry surface (113) overlaps by at least 70% the area of the front lighting exit surface (4).

3. A lamp according to claim 2, wherein the first rear first entry surface (113) completely overlaps the area of the front lighting exit surface (4).

4. A lamp according to any one of the preceding claims, the lamp comprising at least one second pattern generation unit (20) provided with at least one second pattern light guide (21) and at least one second pattern light source (22), wherein each second pattern light guide (21) is defined by a second front exit surface (211), a second lateral entry surface (212) oblique to the second front exit surface (211) and a second rear entry surface (213) parallel to the second front exit surface (211), the second rear entry surface (213) being provided with a portion having a second array of reflecting elements (214) configured and arranged to reflect the light beams coming from the second lateral entry surface (212) so as to exit transversely through the second front exit surface (211), the at least one second patterned light guide (21) being arranged between the first patterned light guide (11) and the illumination light guide (2), such that at least part of the light beams emitted from the first previous lighting exit surface (4) of the illumination light guide (2) pass through the at least one second patterned light guide (21) towards the first rear entry surface (113) of the first patterned light guide (11).

5. A lamp according to claim 4, wherein the second rear entry surface (213) of the at least one second patterning light guide (21) is arranged completely overlapping, according to an emission direction of the light beams of the lighting unit (1), to said previous lighting exit surface (4) of the illumination light guide (2), so that the totality of the light beams emitted by the previous lighting exit surface (4) are directed towards said second rear entry surface (213) of the second pattern light guide (21).

6. A lamp according to claim 4 or 5, wherein the first rear entry surface (113) of the at least one first patterned light guide (11) is completely overlapped, according to an emission direction of the light beams of the lighting unit (1), to said second front exit surface (211) of the at least one second pattern light guide (21), so that the totality of the light beams emitted by the second front exit surface (211) are directed towards said first rear entry surface (113) of the first pattern light guide (11).

7. A lamp according to any one of claims 4 to 6, wherein the portion with the second array of reflective elements (214) of the at least one second pattern light guide (21) is located in a non-overlapping area to the portion with the first array of reflective elements (114) of the first pattern light guide (11).

8. A lamp according to claim 4 to 7, comprising a plurality of second pattern generating units (20, 30), wherein the portion with the second arrays of reflective elements (214, 314) of each of the second pattern light guides (20, 30) is located in a non-overlapping area to the portion with the second array of reflective elements (214, 314) of another of the adjacent second pattern generating units (20, 30).

9. A lamp according to any one of the preceding claims, wherein the lighting output front surface (4) comprises illumination front optics (7) configured to direct the emitted light beams according to the light beam emission direction of the lighting unit (1) and provide a desired homogeneity, intensity and/or photometry of light.

10. A lamp according to claim 9, wherein the first front exit surface (111) of the first patterning light guide (11) is provided with a portion having light deflecting optics (115) configured and arranged to receive the light beams coming from the front lighting exit surface (4) of the illumination light guide (2) and deflect them towards an oblique direction with respect to the emission direction of the light beams of the lighting unit (1).

11. A lamp according to claim 10, wherein the portion with light deflecting optics (115) of the at least one first pattern light guide (11) is located in an area not overlapping to the portion with the first array of reflecting elements (114) and/or not overlapping to the portion with the second array of reflecting elements (214), according to the direction of emission of the light beams of the lighting unit (1).

12. A lamp according to claim 10 or 11, wherein the at least one first patterned light source (12) is configured and arranged to direct the light beams towards the portion with the first array of reflecting elements (114) and not to direct the light beams towards the portion with light deflecting optics (115).

13. A lamp according to any one of the preceding claims, comprising at least one support (13, 23, 33) supporting the first pattern light guide (11), the illumination light guide (2) and/or the at least one second pattern light guide (21, 31) spaced apart from each other.

14. A lamp according to any one of the preceding claims, wherein the at least one illumination light source (3) is configured to emit light beams of an intensity greater than the intensity of the at least one first pattern light source (12) and/or of the at least one second pattern light source (22).

15. A lamp according to any one of the preceding claims, comprising a printed circuit board (40), the at least one illumination light source (3), the at least one first pattern light source (12) and/or the at least one second pattern light source (22) being arranged on said printed circuit board (40).
